(19) Europäisches Patentamt
European Patent Office
Office européen des brevets

(11) **EP 4 580 291 A1**

(12) **EUROPEAN PATENT APPLICATION**
published in accordance with Art. 153(4) EPC

(43) Date of publication:
**02.07.2025 Bulletin 2025/27**

(21) Application number: **23870056.1**

(22) Date of filing: **23.08.2023**

(51) International Patent Classification (IPC):
**H04W 72/23** *(2023.01)*

(52) Cooperative Patent Classification (CPC):
**H04W 72/1263; H04W 72/23**

(86) International application number:
**PCT/CN2023/114388**

(87) International publication number:
**WO 2024/066811 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.09.2022 CN 202211182470**

(71) Applicant: **Honor Device Co., Ltd.
Shenzhen, Guangdong 518040 (CN)**

(72) Inventors:
- **ZHANG, Mingzhu
  Shenzhen, Guangdong 518040 (CN)**
- **ZENG, Yongbo
  Shenzhen, Guangdong 518040 (CN)**
- **SHAN, Baokun
  Shenzhen, Guangdong 518040 (CN)**

(74) Representative: **Isarpatent
- Patent- und Rechtsanwälte Partg mbB
Friedrichstraße 31
80801 München (DE)**

(54) **RESOURCE CONFIGURATION METHOD AND APPARATUS**

(57) This application provides a method and an apparatus for configuring a resource, and the method includes: sending a resource configuration parameter to user equipment, where the resource configuration parameter includes a first configuration parameter and a second configuration parameter, the first configuration parameter is of a non-sequence structure, the first configuration parameter indicates a first cycle of a resource, and the second configuration parameter indicates a time domain interval and/or a time domain location of the resource in the first cycle; or the resource configuration parameter includes a third configuration parameter that is of a sequence structure, and the third configuration parameter indicates a time domain interval and/or a time domain location of a resource. In this solution, one or more configuration parameters are mainly configured by using a network device, so that the user equipment may determine the time domain location of the resource based on an indication of the resource configuration parameter. In this solution, the cycle of the resource is not limited to a single fixed cycle, but may be flexibly configured according to an actual scenario, thereby implementing resource configuration in various scenarios and expanding the scope of applicable scenarios of the method for configuring a resource.

FIG. 2

## Description

This application claims priority to Chinese Patent Application No. 202211182470.5, entitled "METHOD AND APPARATUS FOR CONFIGURING RESOURCE" filed with the China National Intellectual Property Administration on September 27, 2022, which is incorporated herein by reference in its entirety.

## TECHNICAL FIELD

This application relates to the field of communications, and in particular, to a method and an apparatus for configuring a resource.

## BACKGROUND

All current semi-static resources are configured in fixed cycles. Therefore, resource scheduling can be implemented by determining only a start resource and the fixed cycle. However, with the development of technologies, some services, such as an extended reality (extended reality, XR) service, that cannot match the cycle of the current semi-static resource appear. In the XR service, a data frame is usually sent at a rate of multiple frames per second of 15, for example, 90 frames per second or 120 frames per second. Therefore, a value of a sending cycle of a data frame in the XR service is an infinite loop decimal, while a value of a cycle of a semi-static resource is a terminating decimal or an integer. As a result, the cycle of the current semi-static resource cannot fully match the cycle of the XR service.

In addition, for a discontinuous reception (discontinuous reception, DRX) mechanism, where the DRX mechanism is mainly applied to a dynamic scheduling scenario of resource, a current DRX active time can only be an integer multiple of 1 millisecond, and cannot match the XR service. In this case, an active time configuration method also has a problem. Therefore, for the DRX mechanism, how to configure a scheduling resource and configure a parameter of DRX for services such as XR is also a problem that needs to be resolved.

In short, the current method for configuring a resource is not flexible enough, and can only be applied to a scenario with a fixed cycle.

## SUMMARY

This application provides a method and an apparatus for configuring a resource. The configuration method is more flexible, and does not need to be limited to a scenario with a fixed cycle.

According to a first aspect, a method for configuring a resource is provided, and the method includes: sending a resource configuration parameter to user equipment, where the resource configuration parameter includes a first configuration parameter and a second configuration parameter, the first configuration parameter is of a non-sequence structure, the first configuration parameter indicates a first cycle of a resource, and the second configuration parameter indicates a time domain interval and/or a time domain location of the resource in the first cycle; or the resource configuration parameter includes a third configuration parameter, the third configuration parameter is of a sequence structure, and the third configuration parameter indicates a time domain interval and/or a time domain location of a resource.

In the technical solution of this application, one or more resource configuration parameters are mainly configured by using a network device, so that the user equipment may determine the time domain location of the resource based on an indication of the resource configuration parameter sent by the network device. In this solution, the cycle of the resource is not limited to a single fixed cycle, but may be flexibly configured according to an actual scenario, thereby implementing resource configuration in various scenarios and expanding the scope of applicable scenarios of the method for configuring a resource.

In this embodiment of this application, the resource may include a semi-static resource and/or a dynamic scheduling resource. The dynamic scheduling resource may include an active time in DRX. The active time may include an uplink transmission occasion and/or a downlink transmission occasion. The active time may further include a physical downlink control channel monitoring occasion, a physical downlink shared channel receiving occasion, a physical uplink control channel sending occasion, or the like.

It may be understood that the resource appears at an interval of first cycle, or the resource periodically appears based on the first cycle.

With reference to the first aspect, in some implementations of the first aspect, the second configuration parameter is of the non-sequence structure, and the second configuration parameter indicates a resource to periodically appear based on a first time domain interval and/or a first time domain location in the first cycle; or the second configuration parameter is of the sequence structure, and the second configuration parameter indicates a resource to appear based on a second time domain interval value sequence and/or a second time domain location value sequence in the first cycle. That is, the first configuration parameter is of the non-sequence structure, and the second configuration parameter may be of the non-sequence structure or the sequence structure.

In an example, both the first configuration parameter and the second configuration parameter are of the non-sequence structure. That is, the first configuration parameter indicates the first cycle, and the second configuration parameter indicates the first time domain interval and/or the first time domain location in the first cycle. In this case, the second configuration parameter specifically indicates the resource to periodically appear based on the first time domain interval and/or the first time domain location in the first cycle. It is assumed that the first cycle indicated by the first configuration parameter is m milliseconds, the first time domain interval indicated by the second configuration parameter is n milliseconds, and n is a terminating decimal or an integer less than m. In this example, the resource appears every m milliseconds, and the resource appears every n milliseconds in each m-millisecond cycle (that is, the first cycle).

In another example, the first configuration parameter is of the non-sequence structure, and the second configuration parameter is of the sequence structure. To be specific, the first configuration parameter indicates the first cycle, and the second configuration parameter indicates a time domain interval value sequence and/or a time domain location value sequence in the first cycle. For example, the second configuration parameter indicates a second time domain interval value sequence and/or a second time domain location value sequence in the first cycle. In this case, the second configuration parameter indicates the resource to appear based on the second time domain interval value sequence and/or the second time domain location value sequence in the first cycle. It is assumed that the first cycle indicated by the first configuration parameter is m milliseconds, the second time domain interval value sequence indicated by the second configuration parameter is {n1, n2}, and both n1 and n2 are terminating decimals or integers less than m. In this example, the resource appears every m milliseconds, and in each m-millisecond cycle, the resource appears based on a time domain interval and/or a time domain location indicated by the second time domain interval value sequence {n1, n2}.

With reference to the first aspect, in some implementations of the first aspect, when the second configuration parameter is of the sequence structure, the second configuration parameter is in a sequential value-setting manner or a periodic embedded value-setting manner.

When the second configuration parameter is in the sequential value-setting manner, the resource appears in the first cycle based on a time domain interval and/or time domain location order indicated by a sequential value of the second configuration parameter. An example in which the second time domain interval value sequence is {n1, n2} is used. That is, in each m-millisecond cycle, the resource appears every n1 milliseconds first, and then the resource appears every n2 milliseconds. In other words, the resource appears in an $n1^{th}$ millisecond and an $(n1+n2)^{th}$ millisecond.

When the second configuration parameter is in the periodic embedded value-setting manner, where the second time domain interval value sequence indicated by the second configuration parameter includes a third time domain interval and a fourth time domain interval, the third time domain interval is a $1^{st}$ value of the second time domain interval value sequence, and the fourth time domain interval is a $2^{nd}$ value of the second time domain interval value sequence. The second configuration parameter indicates the resource to periodically appear based on the third time domain interval and/or the third time domain location in the first cycle, and the resource to periodically appear based on the fourth time domain interval and/or the fourth time domain location in a time domain interval corresponding to the third time domain interval and/or the third time domain location. An example in which the second time domain interval value sequence is {n1, n2} is used, where n1 is an example of the third time domain interval or the third time domain location, and n2 is an example of the fourth time domain interval or the fourth time domain location. That is, the resource appears every n1 milliseconds in each m-millisecond cycle, and the resource appears every n2 milliseconds in each n1-millisecond cycle. However, it should be understood that, which time domain interval or time domain location respectively corresponds to a $1^{st}$ value and a $2^{nd}$ value in the value sequence may be defined. For example, herein, n1 may also be an example of the fourth time domain interval or the fourth time domain location, and n2 may also be an example of the third time domain interval or the third time domain location. That is, the resource appears every n2 milliseconds in each m-millisecond cycle, and the resource appears every n1 milliseconds in each n2-millisecond cycle.

With reference to the first aspect, in some implementations of the first aspect, the third configuration parameter is in a sequential value-setting manner or a periodic embedded value-setting manner.

In an example, the third configuration parameter is in the sequential value-setting manner. In this case, the third configuration parameter indicates the resource to appear based on sequential values of the third configuration parameter and a time domain interval and/or a time domain location corresponding to each value. An example in which a value sequence of the third configuration parameter is {n1, n2} is used. That is, starting from an initial time domain location of the resource, the resource appears in a $0^{th}$ millisecond, an $n1^{th}$ millisecond, and an $(n1+n2)^{th}$ millisecond. By analogy, the resource appears in an $(n1+n2+n1)^{th}$ millisecond and an $(n1+n2+n1+n2)^{th}$ millisecond, and the resource appears based on a sequence of {n1, n2}.

In another example, when the third configuration parameter is in the periodic embedded value-setting manner, the third configuration parameter indicates the resource to appear based on a second cycle and to appear based on a third cycle in the second cycle. However, it should be understood that the number of cycles specifically indicated by the third configuration parameter is determined by a number of values of the third configuration parameter. An example in which a value sequence of the third configuration parameter is {n1, n2} is used, n1 is an example of the second cycle, and n2 is an example of the third cycle. In this case, the resource appears every n1 milliseconds from the initial time domain location, and the resource appears every n2 milliseconds in each n1-millisecond cycle. However, it should be understood that herein, alternatively, n1 may be an example of the third cycle, and n2 may be an example of the second cycle. In this case, the resource appears every n2 milliseconds from the initial time domain location, and the resource appears every n1 milliseconds in each n2-millisecond cycle.

With reference to the first aspect, in some implementations of the first aspect, the resource configuration parameter further includes a fourth configuration parameter, the fourth configuration parameter is of the sequence structure, and the fourth configuration parameter indicates a time domain interval and/or a time domain location of a resource in a time domain interval corresponding to a last value in a value sequence of the third configuration parameter.

With reference to the first aspect, in some implementations of the first aspect, the fourth configuration parameter is in a sequential value-setting manner or a periodic embedded value-setting manner.

For two value-setting manners of the fourth configuration parameter, refer to the descriptions of two value-setting manners of the second configuration parameter or the third configuration parameter. An only difference is that the fourth configuration parameter indicates the value sequence of the time domain interval and/or the time domain location in the time domain interval corresponding to the last value of the third configuration parameter, the second configuration parameter indicates the value sequence of the time domain interval and/or the time domain location in the first cycle indicated by the first configuration parameter, and the third configuration parameter indicates the value sequence of the time domain interval and/or the time domain location of the resource starting from the initial time domain location.

In this embodiment of this application, information such as a value range, the number of values, and a data structure type of the resource configuration parameter may be indicated by using indication information. It may be understood as that the value range, the number of values, the data structure type, and the like of the resource configuration parameter may be configured or predefined. Therefore, the information about the resource configuration parameter may be indicated by using the indication information. The data structure type may be, for example, an integer type, an enumeration type, or the like. That is, the resource configuration parameter further includes indication information. The indication information indicates at least one of a value range, the number of values, or a data structure type of the resource configuration parameter.

In an example, when the resource configuration parameter includes the first configuration parameter, the resource configuration parameter further includes first information and/or second information. The first information indicates a value range of the first configuration parameter, and the second information indicates a data structure type of the first configuration parameter.

In another example, when the resource configuration parameter includes the second configuration parameter, and the second configuration parameter is of the non-sequence structure, the resource configuration parameter further includes third information and/or fourth information. The third information indicates a value range of the second configuration parameter, and the fourth information indicates a data structure type of the second configuration parameter.

In still another example, when the resource configuration parameter includes the second configuration parameter, and the second configuration parameter is of the sequence structure, the resource configuration parameter further includes fifth information and/or sixth information. The fifth information indicates the value range of the second configuration parameter, and the sixth information indicates the number of values of the second configuration parameter.

In still another example, when the resource configuration parameter includes the third configuration parameter, the resource configuration parameter further includes seventh information and/or eighth information. The seventh information indicates a value range of the third configuration parameter, and the eighth information indicates the number of values of the third configuration parameter.

In still another example, when the resource configuration parameter includes the fourth configuration parameter, the resource configuration parameter further includes ninth information and/or tenth information. The ninth information indicates a value range of the fourth configuration parameter, and the tenth information indicates the number of values of the fourth configuration parameter.

According to a second aspect, a method for configuring a resource is provided, and the method includes: receiving a resource configuration parameter sent by a network device, where the resource configuration parameter includes a first configuration parameter and a second configuration parameter, the first configuration parameter is of a non-sequence structure, the first configuration parameter indicates a first cycle of a resource, and the second configuration parameter indicates a time domain interval and/or a time domain location of the resource in the first cycle; or the resource configuration parameter includes a third configuration parameter, the third configuration parameter is of a sequence structure, and the third configuration parameter indicates a time domain interval and/or a time domain location of a resource; and determining the time domain interval and/or the time domain location of the resource based on the resource configuration parameter.

It should be understood that, for technical effects of the technical solution in the second aspect, refer to the related descriptions in the first aspect. Details are not described herein again. It should be further understood that, for related content of the resource configuration parameter in the second aspect, reference may also be made to the related descriptions in the first aspect. Details are not described herein again.

With reference to the second aspect, in some implementations of the second aspect, the determining the time domain interval and/or the time domain location of the resource based on the resource configuration parameter may include: determining, based on the first configuration parameter, the time domain location of the resource based on the first cycle from an initial time domain location of the resource. That is, this implementation may be used when the resource configuration parameter includes the first configuration parameter and the second configuration parameter.

In some implementations, a time domain interval and/or a time domain location of a resource in an $m^{th}$ first cycle that are/is determined by the UE based on the first configuration parameter satisfy/satisfies:

(first transmitting or receiving slot+m*first cycle*number of slots per frame/10) mod (1024*number of slots per frame); or (first transmitting or receiving symbol+m*first cycle) mod (1024*number of slots per frame*number of frames per slot); or (first transmitting or receiving slot+m*first cycle*L) mod (1024*number of slots per frame), where L is an adjustment factor, m is a positive integer, and mod represents a modulo operation. For example, A mod B represents a remainder obtained by dividing A by B, and the first transmitting or receiving slot and the first transmitting or receiving symbol are initial time domain locations. However, it should be understood that m may alternatively start from 0, that is, m is a non-negative integer. In this case, it only needs to replace m with (m+1) in the foregoing formula.

With reference to the second aspect, in some implementations of the second aspect, the determining the time domain interval and/or the time domain location of the resource based on the resource configuration parameter may include: determining, in the first cycle based on the second configuration parameter, the time domain interval and/or the time domain location of the resource based on a time domain interval and/or a time domain location indicated by the second configuration parameter.

With reference to the second aspect, in some implementations of the second aspect, the determining a resource based on the second configuration parameter may include: determining, in the first cycle, a $p^{th}$ time domain interval and/or time domain location of the resource in the first cycle based on a sum of time domain intervals between a $1^{st}$ time domain location and a $p^{th}$ time domain location of the resource, where p is a positive integer, and the sum of the time domain intervals between the $1^{st}$ time domain location and the $p^{th}$ time domain location is obtained based on the time domain interval and/or the time domain location indicated by the second configuration parameter. That is, a time domain location may be determined through summation of time domain intervals in the first cycle.

With reference to the second aspect, in some implementations of the second aspect, the $p^{th}$ time domain interval and/or time domain location of the resource in the $m^{th}$ first cycle that are/is determined by the UE may satisfy:

when the resource appears in a slot, {first transmitting or receiving slot+[(m-1)*first cycle+sum of time domain intervals between a $1^{st}$ time domain location and a $p^{th}$ time domain location in an $m^{th}$ first cycle]*number of slots per frame/10} mod (1024*number of slots per frame), where m is a positive integer, mod represents a modulo operation, and the first transmitting or receiving slot is the initial time domain location; or
when the resource appears in a symbol, {first transmitting or receiving symbol+[(m-1)*first cycle+sum of time domain intervals between a $1^{st}$ time domain location and a $p^{th}$ time domain location in an $m^{th}$ first cycle]} mod (1024*number of slots per frame*number of frames per slot), where m is a positive integer, mod represents a modulo operation, and the first transmitting or receiving symbol is the initial time domain location; or
when the resource appears in a slot, {first transmitting or receiving slot+[(m-1)*first cycle+sum of time domain intervals between a $1^{st}$ time domain location and a $p^{th}$ time domain location in an $m^{th}$ first cycle]*L} mod (1024*number of slots per frame), where m is a positive integer, mod represents a modulo operation, the first transmitting or receiving slot is the initial time domain location, and L is an adjustment factor.

It should be noted that, due to different structures and value-setting manners of the second configuration parameter, sums of time domain intervals between the $1^{st}$ time domain location and the $p^{th}$ time domain location in the foregoing formula may also be different.

In an example, when the second configuration parameter is of the non-sequence structure, the sum of time domain intervals between the $1^{st}$ time domain location and the $p^{th}$ time domain location is determined based on a first time domain interval and/or a first time domain location indicated by the second configuration parameter, and the sum of time domain intervals between the $1^{st}$ time domain location and the $p^{th}$ time domain location=p*first time domain interval.

In this example, when the second configuration parameter is of the non-sequence structure, the resource periodically appears in the first cycle, and the cycle is a cycle corresponding to the first time domain interval and/or the first time domain location. That is, the resource appears at an interval of first time domain interval and/or first time domain location in the first cycle. When the resource is determined in the first cycle, the resource is determined at an interval of first time domain interval and/or first time domain location in the first cycle. It is assumed that the first cycle indicated by the first configuration parameter is m milliseconds, the first interval indicated by the second configuration parameter is n milliseconds, and n is a terminating decimal or an integer less than m. In this case, the resource is determined every n milliseconds in each m milliseconds from the initial time domain location of the resource.

In this example, the $p^{th}$ time domain interval and/or time domain location in the $m^{th}$ first cycle satisfy/satisfies: when the resource appears in a slot, {first transmitting or receiving slot+[(m-1)*first cycle+sum of time domain intervals between a $1^{st}$ time domain location and a $p^{th}$ time domain location in an $m^{th}$ first cycle]*number of slots per frame/10} mod (1024*number of slots per frame); or when the resource appears in a symbol, {first transmitting or receiving symbol+[(m-1) *first cycle+sum of time domain intervals between a $1^{st}$ time domain location and a $p^{th}$ time domain location in an $m^{th}$ first cycle] } mod (1024*number of slots per frame*number of frames per slot); or when the resource appears in a slot, {first transmitting or receiving slot+[(m-1)*first cycle+sum of time domain intervals between a $1^{st}$ time domain location and a $p^{th}$ time domain location in an $m^{th}$ first cycle]*L} mod (1024*number of slots per frame), where L is an adjustment factor, and p is a positive integer. In the foregoing formula, sum of time domain intervals between a $1^{st}$ time domain location and a $p^{th}$ time domain location in an $m^{th}$ first cycle=p*first time domain interval and/or first time domain location.

With reference to the second aspect, in some implementations of the second aspect, when the second configuration parameter is of a sequence structure of the sequential value-setting manner, that is, when the second configuration parameter is of the sequence structure, and a value-setting manner of the second configuration parameter is sequential value-setting, the sum of time domain intervals between the $1^{st}$ time domain location and the $p^{th}$ time domain location is obtained by using the second time domain interval value sequence and/or the second time domain location value sequence indicated by the second configuration parameter.

With reference to the second aspect, in some implementations of the second aspect, when the second configuration parameter is of a sequence structure of the periodic embedded value-setting manner, that is, when the second configuration parameter is of the sequence structure, and a value-setting manner of the second configuration parameter is the periodic embedded value-setting manner, the second time domain interval value sequence includes a third time domain interval and a fourth time domain interval, and the second time domain location value sequence includes a third time domain location and a fourth time domain location; the second configuration parameter indicates the resource to periodically appear based on the third time domain interval and/or the third time domain location in the first cycle, and the resource to periodically appear based on the fourth time domain interval and/or the fourth time domain location in a time domain interval corresponding to the third time domain interval and/or the third time domain location; and the determining, in the first cycle based on the second configuration parameter, the time domain interval and/or the time domain location of the resource based on a time domain interval and/or a time domain location indicated by the second configuration parameter may include:

determining, in a time domain interval corresponding to the first cycle, the time domain interval and/or the time domain location of the resource based on the third time domain interval and/or the third time domain location; and determining, in a time domain interval corresponding to the third time domain interval and/or the third time domain location, the time domain interval and/or the time domain location of the resource based on the fourth time domain interval and/or the fourth time domain location.

With reference to the second aspect, in some implementations of the second aspect, a $q^{th}$ time domain interval and/or time domain location of the resource that are/is determined, based on the fourth time domain interval, in a time domain interval corresponding to an $n^{th}$ third time domain interval and/or third time domain location in the $m^{th}$ first cycle may satisfy:

when the resource appears in a slot, {first transmitting or receiving slot+[(m-1)*first cycle+(n-1)*third time domain interval+q*fourth time domain interval]*number of slots per frame/10} mod (1024*number of slots per frame), where m, n, and q are positive integers, mod represents a modulo operation, and the first transmitting or receiving slot is the initial time domain location; or

when the resource appears in a symbol, {first transmitting or receiving symbol+[(m-1)*first cycle+(n-1)*third time domain interval+q*fourth time domain interval]} mod (1024*number of slots per frame*number of frames per slot), where m, n, and q are positive integers, mod represents a modulo operation, and the first transmitting or receiving symbol is the initial time domain location.

With reference to the second aspect, in some implementations of the second aspect, when the resource configuration parameter includes the third configuration parameter, the determining the time domain interval and/or the time domain location of the resource based on the resource configuration parameter may include: determining, based on the third configuration parameter, the time domain interval and/or the time domain location of the resource based on a value sequence of the third configuration parameter from an initial time domain location of the resource.

With reference to the second aspect, in some implementations of the second aspect, the third configuration parameter is in a sequential value-setting manner, the third configuration parameter indicates the resource to appear based on a sequential value of the third configuration parameter and a time domain interval and/or a time domain location corresponding to each value, and the determining, based on the third configuration parameter, the time domain interval and/or the time domain location of the resource based on a value sequence of the third configuration parameter from an initial time domain location of the resource includes: determining the time domain location of the resource based on the sequential value of the third configuration parameter from the initial time domain location of the resource. An example in which the value sequence of the third configuration parameter is {n1, n2} is used. That is, starting from the initial time domain location of the resource, it is determined the resource appears in a 0$^{th}$ millisecond, an n1$^{th}$ millisecond, and an (n1+n2)$^{th}$ millisecond. By analogy, the resource appears in an (n1+n2+n1)$^{th}$ millisecond and an (n1+n2+n1+n2)$^{th}$ millisecond, and the resource sequentially appears based on a sequence of {n1, n2}.

With reference to the second aspect, in some implementations of the second aspect, the third configuration parameter is in a periodic embedded value-setting manner, the third configuration parameter indicates the resource to appear based on a second cycle and to appear based on a third cycle in the second cycle, and the determining, based on the third configuration parameter, the time domain interval and/or the time domain location of the resource based on a value sequence of the third configuration parameter from an initial time domain location of the resource includes: determining the time domain interval and/or the time domain location of the resource based on the second cycle from the initial time domain location of the resource; and determining the time domain interval and/or the time domain location of the resource based on the third cycle in the second cycle.

An example in which a value sequence of the third configuration parameter is {n1, n2} is used, n1 is an example of the second cycle, and n2 is an example of the third cycle. That is, the resource appears every n1 milliseconds, and the resource appears every n2 milliseconds in each n1-millisecond cycle. In this case, step S202 may include: determining the time domain interval and/or the time domain location of the resource based on the second cycle from the initial time domain location of the resource; and determining the time domain interval and/or the time domain location of the resource based on the third cycle in the second cycle.

The time domain interval and/or the time domain location determined based on the third configuration parameter may satisfy the following formula:

{first transmitting or receiving slot+(sum of time domain intervals between a 1$^{st}$ time domain location and a p$^{th}$ time domain location)*number of slots per frame/10} mod (1024*number of slots per frame); or (first transmitting or receiving symbol+sum of time domain intervals between a 1$^{st}$ time domain location and a p$^{th}$ time domain location) mod (1024*number of slots per frame*number of frames per slot). In the foregoing formula, sum of time domain intervals between a 1$^{st}$ time domain location and a p$^{th}$ time domain location=$\sum_{1}^{p} t$ , where $t$ represents a time domain length of each time domain interval.

With reference to the second aspect, in some implementations of the second aspect, an n$^{th}$ time domain interval and/or time domain location of the resource that are/is determined based on the third cycle in an m$^{th}$ second cycle satisfy/satisfies:

when the resource appears in a slot, {first transmitting or receiving slot+[(m-1)*second cycle+n*third cycle]*number of slots per frame/10} mod (1024*number of slots per frame), where m and n are positive integers, mod represents a modulo operation, and the first transmitting or receiving slot is the initial time domain location; or

when the resource appears in a symbol, {first transmitting or receiving symbol+[(m-1)*second cycle+n*third cycle] } mod (1024*number of slots per frame*number of frames per slot), where m and n are positive integers, mod represents a modulo operation, and the first transmitting or receiving symbol is the initial time domain location.

With reference to the second aspect, in some implementations of the second aspect, the resource configuration parameter further includes a fourth configuration parameter, the fourth configuration parameter is of the sequence structure, and the fourth configuration parameter indicates a time domain interval and/or a time domain location of a resource in a time domain interval corresponding to a last value in a value sequence of the third configuration parameter; and the determining, based on the third configuration parameter, the time domain interval and/or the time domain location of the resource based on a value sequence of the third configuration parameter from an initial time domain location of the resource may further include: determining the time domain interval and/or the time domain location based on a value sequence of the fourth configuration parameter in the time domain interval corresponding to the last value of the value sequence of the third configuration parameter.

With reference to the second aspect, in some implementations of the second aspect, the fourth configuration parameter is in a sequential value-setting manner or a periodic embedded value-setting manner.

In an example, when the resource is determined based on the fourth configuration parameter, it is assumed that the third configuration parameter indicates a total of x+1 cycles including the first cycle to an x+1 cycle. It should be understood that the first cycle herein is not the first cycle indicated by the first configuration parameter. A y$^{th}$ time domain location in an (x+1)$^{th}$ cycle (that is, the last cycle) in ... in a q$^{th}$ third cycle in an n$^{th}$ second cycle in an m$^{th}$ first cycle satisfies:

may satisfy: (m-1)*first cycle+(n-1)*second cycle+(q-1)*third cycle+...+ (x-1) $x^{th}$ cycle+sum $\sum_{1}^{y} f$ of first y time domain intervals in the last cycle, where f represents a time domain length of each time domain interval in the last cycle.

According to a third aspect, an apparatus for configuring a resource is provided. The apparatus includes a unit that includes software and/or hardware and is configured to perform any one of the methods in the first aspect or the second aspect.

According to a fourth aspect, an electronic device is provided, including a memory, a processor, and a computer program that is stored in the memory and that can be run on the processor. When the processor implements the computer program, any one of the methods in the first aspect or the second aspect can be implemented.

Optionally, when the electronic device is configured to implement any one of the methods in the first aspect, the electronic device may be a network device, and when the electronic device is configured to implement any one of the methods in the second aspect, the electronic device may be user equipment.

According to a fifth aspect, a chip is provided, including a processor, where the processor is configured to read and execute a computer program stored in a memory, and when the computer program is executed by the processor, any one of the methods in the first aspect or the second aspect can be implemented.

Optionally, the chip further includes a memory, and the memory is electrically connected to the processor.

Optionally, the chip may further include a communication interface.

According to a sixth aspect, a computer-readable storage medium is provided. The computer-readable storage medium stores a computer program, and when the computer program is executed by a processor, any one of the methods in the first aspect or the second aspect can be implemented.

According to a seventh aspect, a computer program product is provided. The computer program product includes a computer program, and when the computer program is executed by a processor, any one of the methods in the first aspect or the second aspect can be implemented.

**BRIEF DESCRIPTION OF DRAWINGS**

FIG. 1 is a schematic diagram of an applicable network scenario according to an embodiment of this application;

FIG. 2 is a schematic flowchart of a method for configuring a resource according to an embodiment of this application;

FIG. 3 is a schematic diagram of a first configuration parameter and a second configuration parameter that are both of a non-sequence structure according to this application;

FIG. 4 is a schematic diagram of a second configuration parameter in a sequential value-setting manner according to this application;

FIG. 5 is a schematic diagram of a second configuration parameter in a periodic embedded value-setting manner according to this application;

FIG. 6 is a schematic diagram of a third configuration parameter in a sequential value-setting manner according to this application;

FIG. 7 is a schematic diagram of a third configuration parameter in a periodic embedded value-setting manner according to this application;

FIG. 8 is a schematic diagram of an apparatus for configuring a resource according to an embodiment of this application;

FIG. 9 is a schematic diagram of another apparatus for configuring a resource according to an embodiment of this application; and

FIG. 10 is a schematic diagram of a hardware structure of an electronic device according to an embodiment of this application.

**DESCRIPTION OF EMBODIMENTS**

The following describes solutions of embodiments of this application with reference to the accompanying drawings. The method for configuring a resource provided in this application can be applied to various wireless communication systems.

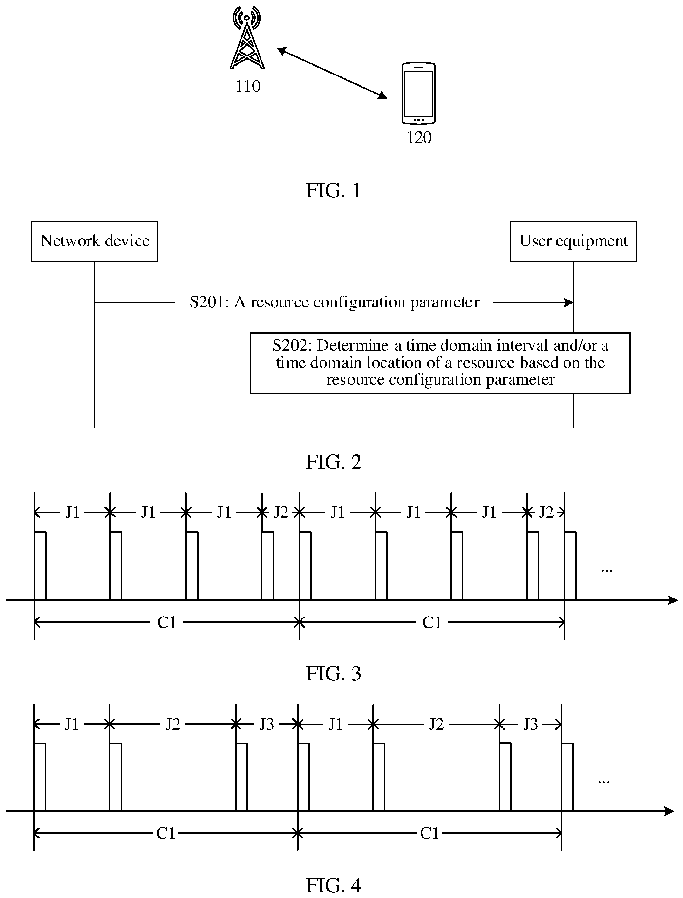

FIG. 1 is a schematic diagram of an applicable network scenario according to an embodiment of this application. As shown in FIG. 1, the wireless communication system in this scenario includes at least one network device 110 and at least one user equipment (user equipment, UE) 120. The wireless communication system may be a long term evolution (long term evolution, LTE) network, a fifth generation (5G) network, a future sixth generation (6G) network, or various wireless communication systems evolved subsequently.

In the embodiments of this application, the network device 110 may include an access network (access network, AN) device or a radio access network (radio access network, RAN) device. The access network device, for example, a base station (for example, an access point), may refer to a device that is in an access network and that communicates with a wireless terminal device over an air interface through one or more cells. The base station, for example, may be an evolved base station (NodeB, eNB, or e-NodeB, evolved NodeB), or may include a next generation NodeB (next generation NodeB, gNB), a next generation evolved NodeB (next generation evolved NodeB, ng-eNB), or an en-gNB (enhanced next generation NodeB, gNB) in a 5G system: an enhanced next generation base station, or a sixth generation network base station, or a base station of a subsequent evolved wireless communication system; and may also include a centralized unit (centralized unit, CU), a distributed unit (distributed unit, DU), and the like in a cloud radio access network (cloud radio access network, Cloud RAN) system, which are not listed one by one.

The user equipment may also be referred to as a terminal device, and may be a computer, a mobile phone, a smartwatch, a tablet computer, a notebook computer, an XR terminal, an in-vehicle terminal, or the like. The XR terminal may further include a virtual reality (virtual reality, VR) terminal, an augmented reality (augmented reality, AR) terminal, and a mixed reality (mixed reality, MR) terminal.

As described above, a cycle of a current semi-static resource is a fixed cycle (which may also be understood as a single cycle), and a value of the cycle is a terminating decimal or an integer and cannot fully match a transmission cycle of a data frame of an XR service. To resolve this problem, a length of the resource cycle may be changed at an interval of several resource cycles. However, in this case, a time domain interval of a new resource is no longer periodic, and currently, there is no solution for configuring such an aperiodic resource. In addition, currently, the user equipment can determine only a resource with a fixed cycle but cannot determine an aperiodic resource. Consequently, when a resource appears cannot be determined, that is, a time domain location of the resource cannot be determined, and the resource cannot be scheduled at a proper moment (namely, a time domain location).

In addition, for a DRX mechanism, where the DRX mechanism is mainly applied to a dynamic scheduling scenario of resource, a current DRX active time can only be an integer multiple of 1 millisecond, and cannot match the XR service. In this case, an active time configuration method also has a problem. Therefore, for the DRX mechanism, how to configure a scheduling resource and configure a parameter of DRX for services such as XR is also a problem that needs to be resolved. For the problem, the solution for configuring a resource provided in the embodiments of this application may further be used for the DRX mechanism, to configure a dynamic scheduling resource of DRX, that is, to configure various active times of DRX.

In other words, the resource in the embodiments of this application may be a semi-static resource, may be the dynamic scheduling resource of DRX, or may be another communication resource.

The following describes the solution for configuring a resource in the embodiments of this application with reference to the accompanying drawings.

FIG. 2 is a schematic flowchart of a method for configuring a resource according to an embodiment of this application.

S201: A network device sends a resource configuration parameter to UE. The resource configuration parameter may be one configuration parameter, or may be a plurality of configuration parameters. Each configuration parameter may be in a single-column structure (a non-sequence structure), or may be in a multi-column structure (a sequence structure).

In an implementation, the resource configuration parameter includes a first configuration parameter and a second configuration parameter, and the first configuration parameter is of the non-sequence structure. The first configuration parameter indicates a first cycle of a resource. The second configuration parameter indicates a time domain interval and/or a time domain location of the resource in the first cycle.

It may be understood that the resource appears at an interval of first cycle, or the resource periodically appears based on the first cycle.

In another implementation, the resource configuration parameter includes a third configuration parameter, the third configuration parameter is of the sequence structure, and the third configuration parameter indicates a time domain interval and/or a time domain location of a resource.

It should be noted that, in this embodiment of this application, the resource may include a semi-static resource and/or a dynamic scheduling resource. The dynamic scheduling resource may include an active time (active time) in DRX. The active time may include an uplink transmission occasion and/or a downlink transmission occasion. The active time may further include a physical downlink control channel (physical downlink control channel, PDCCH) monitoring occasion, a physical downlink shared channel (physical downlink shared channel, PDSCH) receiving occasion, a physical uplink control channel (physical uplink shared channel, PUSCH) sending occasion, or the like.

When the resource configuration parameter includes the first configuration parameter and the second configuration parameter, the first configuration parameter is of the non-sequence structure, and the second configuration parameter may be of the non-sequence structure or the sequence structure.

In an example, both the first configuration parameter and the second configuration parameter are of the non-sequence structure. That is, the first configuration parameter indicates the first cycle, and the second configuration parameter indicates the first time domain interval and/or the first time domain location in the first cycle. In this case, the second configuration parameter specifically indicates the resource to periodically appear based on the first time domain interval and/or the first time domain location in the first cycle. It is assumed that the first cycle indicated by the first configuration parameter is m milliseconds, the first time domain interval indicated by the second configuration parameter is n milliseconds, and n is a terminating decimal or an integer less than m. In this example, the resource appears every m milliseconds, and the resource appears every n milliseconds in each m-millisecond cycle

(that is, the first cycle). It is assumed that the first time domain location indicated by the second configuration parameter is an $n^{th}$ millisecond, and n is a terminating decimal or an integer less than m. In this example, the resource appears every m milliseconds, and the resource appears every $n^{th}$ millisecond in each m-millisecond cycle (that is, the first cycle).

In another example, the first configuration parameter is of the non-sequence structure, and the second configuration parameter is of the sequence structure. To be specific, the first configuration parameter indicates the first cycle, and the second configuration parameter indicates a time domain interval value sequence and/or a time domain location value sequence in the first cycle. For example, the second configuration parameter indicates a second time domain interval value sequence and/or a second time domain location value sequence in the first cycle. In this case, the second configuration parameter indicates the resource to appear based on the second time domain interval value sequence and/or the second time domain location value sequence in the first cycle. It is assumed that the first cycle indicated by the first configuration parameter is m milliseconds, the second time domain interval value sequence indicated by the second configuration parameter is {n1, n2}, and both n1 and n2 are terminating decimals or integers less than m. In this example, the resource appears every m milliseconds, and in each m-millisecond cycle, the resource appears based on a time domain interval and/or a time domain location indicated by the second time domain interval value sequence {n1, n2}.

Optionally, in this example, a value-setting manner of the second configuration parameter of the sequence structure may be a sequential value-setting manner or a periodic embedded value-setting manner, but it should be understood that the value-setting manner may alternatively be another value-setting manner. In this application, the sequential value-setting manner and the periodic embedded value-setting manner are mainly used as examples.

When the second configuration parameter is in the sequential value-setting manner, the resource appears in the first cycle based on a time domain interval and/or time domain location order indicated by a sequential value of the second configuration parameter. An example in which the second time domain interval value sequence is {n1, n2} is used. That is, in each m-millisecond cycle, the resource appears every n1 milliseconds first, and then the resource appears every n2 milliseconds. In other words, the resource appears in an $n1^{th}$ millisecond and an $(n1+n2)^{th}$ millisecond. It should be understood that n1 and n2 may be equal or may not be equal.

When the second configuration parameter is in the periodic embedded value-setting manner, where the second time domain interval value sequence indicated by the second configuration parameter includes a third time domain interval and a fourth time domain interval, the third time domain interval is a $1^{st}$ value of the second time domain interval value sequence, and the fourth time domain interval is a $2^{nd}$ value of the second time domain interval value sequence. The second configuration parameter indicates the resource to periodically appear based on the third time domain interval and/or the third time domain location in the first cycle, and the resource to periodically appear based on the fourth time domain interval and/or the fourth time domain location in a time domain interval corresponding to the third time domain interval and/or the third time domain location. An example in which the second time domain interval value sequence is {n1, n2} is used, where n1 is an example of the third time domain interval or the third time domain location, and n2 is an example of the fourth time domain interval or the fourth time domain location. That is, the resource appears every n1 milliseconds in each m-millisecond cycle, and the resource appears every n2 milliseconds in each n1-millisecond cycle. However, it should be understood that, which time domain interval or time domain location respectively corresponds to a $1^{st}$ value and a $2^{nd}$ value in the second time domain interval value sequence may be defined. For example, herein, n1 may also be an example of the fourth time domain interval or the fourth time domain location, and n2 may also be an example of the third time domain interval or the third time domain location. That is, the resource appears every n2 milliseconds in each m-millisecond cycle, and the resource appears every n1 milliseconds in each n2-millisecond cycle.

For example, it is assumed that in the foregoing example, m=50, and when the second configuration parameter is in the sequential value-setting manner, if n1=16, and n2=17, the time domain location of the resource is determined in a sequence with an interval of 16 and 17 in each 50-millisecond cycle. Starting from a $0^{th}$ millisecond, that is, within 50 milliseconds, the resource appears in a $16^{th}$ millisecond and a $33^{rd}$ (that is, 16+17=33) millisecond. When the second configuration parameter is the periodic embedded value-setting manner, if n1=16, and n2=5, the time domain location of the resource is determined at an interval of 16 milliseconds in each 50-millisecond cycle, and the time domain location of the resource is determined at an interval of 5 milliseconds at each interval of 16 milliseconds.

It should be understood that a value-setting manner of the third configuration parameter may also be the sequential value-setting manner or the periodic embedded value-setting manner, or may be another value-setting manner.

In an example, the third configuration parameter is in the sequential value-setting manner. In this case, the third configuration parameter indicates the resource to appear based on sequential values of the third configuration parameter and a time domain interval and/or a time domain location corresponding to each value. An example in which the third configuration parameter is {n1, n2} is used. That is, starting from an initial time domain location of the resource, the resource appears in a $0^{th}$ millisecond, an $n1^{th}$ millisecond, and an $(n1+n2)^{th}$ millisecond. By analogy, the resource appears in an $(n1+n2+n1)^{th}$ millisecond and an $(n1+n2+n1+n2)^{th}$ millisecond, and the resource appears based on a sequence of {n1, n2}. It is equivalent to that the resource appears at a cycle of (n1+n2) milliseconds, and the resource appears in an $n1^{th}$ millisecond in each (n1+n2)-millisecond cycle. An example in which the value sequence is {n1, n2, n3} is used. That is, the resource appears in a $0^{th}$ millisecond, an $n1^{th}$ millisecond, an $(n1+n2)^{th}$ millisecond, and an $(n1+n2+n3)^{th}$ millisecond in each (n1+n2+n3)-millisecond cycle, and periodically appears by analogy. It is equivalent to that the resource appears at a cycle of (n1+n2+n3) milliseconds, and the resource appears in an $n1^{th}$ millisecond and an $(n1+n2)^{th}$ millisecond in each (n1+n2+n3)-millisecond cycle. However, it should be understood that, although a time domain interval of a resource that may be similar to the foregoing sequence structure in which the first configuration parameter is in the single-column structure, and the second configuration parameter is in the sequential value-setting manner can be configured by using the third configuration parameter, the two configuration methods are different.

In another example, when the third configuration parameter is in the periodic embedded value-setting manner, the third configuration parameter indicates the resource to appear based on a second cycle and to appear based on a third cycle in the second cycle. However, it should be understood that the number of cycles specifically indicated by the third configuration parameter is determined by a number of values of the third configuration parameter. An example in which a value sequence of the third configuration parameter is {n1, n2} is used, n1 is an example of the second cycle, and n2 is an example of the third cycle. In this case, the resource appears every n1 milliseconds from the initial time domain location, and the resource appears every n2 milliseconds in each n1-millisecond cycle. However, it should be understood that herein, alternatively, n1 may be an example of the third cycle, and n2 may be an example of the second cycle. In this case, the resource appears every n2 milliseconds from the initial time domain location, and the resource appears every n1 milliseconds in each n2-millisecond cycle.

In still another example, the resource configuration parameter further includes a fourth configuration parameter, and the fourth configuration parameter is of the sequence structure and indicates a time domain interval and/or a time domain location of a resource in a time domain interval corresponding to a last value in a value sequence of the third configuration parameter.

It should be understood that a value-setting manner of a value sequence of the fourth configuration parameter may also be the sequential value-setting manner or the periodic embedded value-setting manner, or may be another value-setting manner.

In this embodiment of this application, information such as a value range, the number of values, and a data structure type of the resource configuration parameter may be indicated by using indication information. It may be understood as that the value range, the number of values, the data structure type, and the like of the resource configuration parameter may be configured or predefined. Therefore, the information about the resource configuration parameter may be indicated by using the indication information. The data structure type may be, for example, an integer type, an enumeration type, or the like.

In an implementation, the resource configuration parameter further includes indication information. The indication information indicates at least one of a value range, the number of values, or a data structure type of the resource configuration parameter.

In an example, when the resource configuration parameter includes the first configuration parameter, the resource configuration parameter further includes first information and/or second information. The first information indicates a value range of the first configuration parameter, and the second information indicates a data structure type of the first configuration parameter.

In another example, when the resource configuration parameter includes the second configuration parameter, and the second configuration parameter is of the non-sequence structure, the resource configuration parameter further includes third information and/or fourth information. The third information indicates a value range of the second configuration parameter, and the fourth information indicates a data structure type of the second configuration parameter.

In still another example, when the resource configuration parameter includes the second configuration parameter, and the second configuration parameter is of the sequence structure, the resource configuration parameter further includes fifth information and/or sixth information. The fifth information indicates the value range of the second configuration parameter, and the sixth information indicates the number of values of the second configuration parameter.

In still another example, when the resource configuration parameter includes the third configuration parameter, the resource configuration parameter further includes seventh information and/or eighth information. The seventh information indicates a value range of the third configuration parameter, and the eighth information indicates the number of values of the third configuration parameter.

In still another example, when the resource configuration parameter includes the fourth configuration parameter, the resource configuration parameter further includes ninth information and/or tenth information. The ninth information indicates a value range of the fourth configuration parameter, and the tenth information indicates the number of values of the fourth configuration parameter.

The network device may send the resource configuration parameter to the UE, so that the UE may determine the time domain interval and/or the time domain location of the resource based on the resource configuration parameter. That is, after receiving the resource configuration parameter, the UE may perform step S202.

S202: The UE determines the time domain interval and/or the time domain location of the resource based on the resource configuration parameter.

After receiving the resource configuration parameter sent by the network device, the UE may determine the time domain interval and/or the time domain location of the resource based on the resource configuration parameter.

The time domain location may be understood as a time at which the resource appears, or a time at which the resource may be scheduled, that is, a location of the resource in time domain. It can be learned that the location in this embodiment of this application refers to a time domain location rather than a spatial location, and may also be understood as a time point.

It can be known from the foregoing that resource configuration parameters may be diversified. Therefore, when the time domain interval and/or the time domain location of the resource is determined in step S202, the time domain location of the resource may also be determined in different manners based on different cases of the resource configuration parameters.

In an implementation, step S202 may include: determining, based on the first configuration parameter, the time domain location of the resource based on the first cycle from an initial time domain location of the resource. That is, this implementation may be used when the resource configuration parameter includes the first configuration parameter and the second configuration parameter.

A first transmitting or receiving symbol may satisfy the following:

$$SFN_{\text{start time}} \times numberOfSlotsPerFrame \times numberOfSymbolsPerSlot + \text{slot}_{\text{start time}} \times numberOfSymbolsPerSlot + \text{symbol}_{\text{start time}}; \text{ or}$$

$$timeReferenceSFN \times numberOfSlotsPerFrame \times numberOfSymbolsPerSlot + timeDomainOffset \times numberOfSymbolsPerSlot + S.$$

SFN represents a system frame number (system frame number, SFN), slot represents a slot, and symbol represents a symbol.

A first transmitting or receiving slot may satisfy the following:

$$numberOfSlotsPerFrame \times SFN_{\text{start time}} + slot_{\text{start time}}.$$

In an example, a time domain interval and/or a time domain location of a resource in an $m^{\text{th}}$ first cycle that are/is determined by the UE based on the first configuration parameter satisfy/satisfies:

(first transmitting or receiving slot+m*first cycle*number of slots per frame/10) mod (1024*number of slots per frame); or (first transmitting or receiving symbol+m*first cycle) mod (1024*number of slots per frame*number of frames per slot); or (first transmitting or receiving slot+m*first cycle*L) mod (1024*number of slots per frame), where L is an adjustment factor, m is a positive integer, and mod represents a modulo operation. For example, A mod B represents a remainder obtained by dividing A by B, and the first transmitting or receiving slot and the first transmitting or receiving symbol are initial time domain locations. However, it should be understood that m may alternatively start from 0, that is, m is a non-negative integer. In this case, it only needs to replace m with (m+1) in the foregoing formula.

In another implementation, step S202 may include: determining, in the first cycle based on the second configuration parameter, the time domain interval and/or the time domain location of the resource based on a time domain interval and/or a time domain location indicated by the second configuration parameter.

In an example, the determining a resource based on the second configuration parameter may include: determining, in the first cycle, a $p^{\text{th}}$ time domain interval and/or time domain location of the resource in the first cycle based on a sum of time domain intervals between a $1^{\text{st}}$ time domain location and a $p^{\text{th}}$ time domain location of the resource, where p is a positive integer, and the sum of the time domain intervals between the $1^{\text{st}}$ time domain location and the $p^{\text{th}}$ time domain location is obtained based on the time domain interval and/or the time domain location indicated by the second configuration parameter. That is, a time domain location may be determined through summation of time domain intervals in the first cycle.

In this example, the $p^{\text{th}}$ time domain interval and/or time domain location of the resource in the $m^{\text{th}}$ first cycle that are/is determined by the UE may satisfy:

when the resource appears in a slot, {first transmitting or receiving slot+[(m-1)*first cycle+sum of time domain intervals between a $1^{st}$ time domain location and a $p^{th}$ time domain location in an $m^{th}$ first cycle]*number of slots per frame/10} mod (1024*number of slots per frame), where m is a positive integer, mod represents a modulo operation, and the first transmitting or receiving slot is the initial time domain location; or

when the resource appears in a symbol, {first transmitting or receiving symbol+[(m-1)*first cycle+sum of time domain intervals between a $1^{st}$ time domain location and a $p^{th}$ time domain location in an $m^{th}$ first cycle]} mod (1024*number of slots per frame*number of frames per slot), where m is a positive integer, mod represents a modulo operation, and the first transmitting or receiving symbol is the initial time domain location; or

when the resource appears in a slot, {first transmitting or receiving slot+[(m-1)*first cycle+sum of time domain intervals between a $1^{st}$ time domain location and a $p^{th}$ time domain location in an $m^{th}$ first cycle]*L} mod (1024*number of slots per frame), where m is a positive integer, mod represents a modulo operation, the first transmitting or receiving slot is the initial time domain location, and L is an adjustment factor.

In still another implementation, step S202 may include: when the second configuration parameter is of the non-sequence structure, determining, based on the second configuration parameter in the first cycle, the time domain interval and/or the time domain location of the resource based on the first time domain interval and/or the first time domain location indicated by the second configuration parameter, where the second configuration parameter indicates the resource to periodically appear based on the first time domain interval and/or the first time domain location in the first cycle; or when the second configuration parameter is of the sequence structure, determining, based on the second configuration parameter in the first cycle, the time domain interval and/or the time domain location of the resource based on the second time domain interval value sequence and/or the second time domain location value sequence indicated by the second configuration parameter, where the second configuration parameter indicates the resource to periodically appear based on the second time domain interval value sequence and/or the second time domain location value sequence in the first cycle. That is, in two cases in which the second configuration parameter is of the non-sequence structure and the sequence structure, different methods are used to determine the time domain interval and/or the time domain location in the first cycle.

It should be noted that, due to different structures and value-setting manners of the second configuration parameter, sums of time domain intervals between the $1^{st}$ time domain location and the $p^{th}$ time domain location in the foregoing formula may also be different.

Two cases in this implementation are separately described below.

In an example, when the second configuration parameter is of the non-sequence structure, the resource periodically appears in the first cycle, and the cycle is a cycle corresponding to the first time domain interval and/or the first time domain location. That is, the resource appears at an interval of first time domain interval and/or first time domain location in the first cycle. When the resource is determined in the first cycle, the resource is determined at an interval of first time domain interval and/or first time domain location in the first cycle. It is assumed that the first cycle indicated by the first configuration parameter is m milliseconds, the first interval indicated by the second configuration parameter is n milliseconds, and n is a terminating decimal or an integer less than m. In this case, the resource is determined every n milliseconds in each m milliseconds from the initial time domain location of the resource.

In this example, the sum of time domain intervals between the $1^{st}$ time domain location and the $p^{th}$ time domain location is determined based on the first time domain interval and/or the first time domain location indicated by the second configuration parameter, and the sum of time domain intervals between the $1^{st}$ time domain location and the $p^{th}$ time domain location=p*first time domain interval.

In this example, the $p^{th}$ time domain interval and/or time domain location of the resource in the $m^{th}$ first cycle that are/is determined by the UE based on the second configuration parameter satisfy/satisfies:

when the resource appears in a slot, {first transmitting or receiving slot+[(m-1)*first cycle+sum of time domain intervals between a $1^{st}$ time domain location and a $p^{th}$ time domain location in an $m^{th}$ first cycle]*number of slots per frame/10} mod (1024*number of slots per frame); or when the resource appears in a symbol, {first transmitting or receiving symbol+[(m-1)*first cycle+sum of time domain intervals between a $1^{st}$ time domain location and a $p^{th}$ time domain location in an $m^{th}$ first cycle]} mod (1024*number of slots per frame*number of frames per slot), where p is a positive integer. In the foregoing formula, sum of time domain intervals between a $1^{st}$ time domain location and a $p^{th}$ time domain location in an $m^{th}$ first cycle=p*first time domain interval and/or first time domain location.

It should be noted that p may alternatively start from 0 provided that the $1^{st}$ time domain interval is correspondingly replaced with a $0^{th}$ time domain location, and p in p*first time domain interval and/or first time domain location is changed to p+1.

In another example, when the second configuration parameter is of the sequence structure, the resource appears in the first cycle based on the second time domain interval value sequence and/or the second time domain location value sequence. Because value-setting manners of the second configuration parameter may be different, the resource may be determined based on different value-setting manners.

Optionally, when the second configuration parameter is in the sequential value-setting manner, the determining a resource in the first cycle may include: the sum of time domain intervals between the 1st time domain location and the $p^{th}$ time domain location is obtained based on the second time domain interval value sequence and/or the second time domain location value sequence indicated by the second configuration parameter.

In this example, when the second configuration parameter is of a sequence structure of the sequential value-setting manner, the $p^{th}$ time domain interval and/or time domain location of the resource in the $m^{th}$ first cycle that are/is determined by the UE satisfy/satisfies:

when the resource appears in a slot, {first transmitting or receiving slot+[(m-1)*first cycle+sum of time domain intervals between a 1st time domain location and a $p^{th}$ time domain location in an $m^{th}$ first cycle]*number of slots per frame/10} mod (1024*number of slots per frame); or

when the resource appears in a symbol, {first transmitting or receiving symbol+[(m-1)*first cycle+sum of time domain intervals between a 1st time domain location and a $p^{th}$ time domain location in an $m^{th}$ first cycle]} mod (1024*number of slots per frame*number of frames per slot). For the explanations of the letters and terms, refer to the foregoing descriptions. Details are not described herein again. In the foregoing formula, sum of time domain intervals between a

$$m^{th} \text{ first cycle} = \sum_{1}^{p} t$$

1st time domain location and a $p^{th}$ time domain location in an , where $t$ represents a time domain length of each time domain interval between the 1st time domain location and the $p^{th}$ time domain location.

It can be learned that, unlike the foregoing second configuration parameter, which is of the non-sequence structure, because not all time domain lengths of the time domain intervals are the same, a multiplication operation can no longer be used, but an accumulation calculation needs to be performed on the sum of time domain intervals between the 1st time domain location and the $p^{th}$ time domain location.

In this example, when the second configuration parameter is of a sequence structure of the periodic embedded value-setting manner, the second time domain interval value sequence includes a third time domain interval and a fourth time domain interval, and second time domain location value sequence includes a third time domain location and a fourth time domain location. The second configuration parameter indicates the resource to periodically appear based on the third time domain interval and/or the third time domain location in the first cycle, and the resource to periodically appear based on the fourth time domain interval and/or the fourth time domain location in a time domain interval corresponding to the third time domain interval and/or the third time domain location. Therefore, when the resource is determined in the first cycle, the following may be included:

determining, in a time domain interval corresponding to the first cycle, the time domain interval and/or the time domain location of the resource based on the third time domain interval and/or the third time domain location; and determining, in a time domain interval corresponding to the third time domain interval and/or the third time domain location, the time domain interval and/or the time domain location of the resource based on the fourth time domain interval and/or the fourth time domain location.

Optionally, when the second configuration parameter is of the sequence structure of the periodic embedded value-setting manner, a $q^{th}$ time domain interval and/or time domain location of the resource that are/is determined by the UE based on the second time domain interval value sequence and/or the second time domain location value sequence and that are/is determined, based on the fourth time domain interval, in a time domain interval corresponding to an $n^{th}$ third time domain interval and/or third time domain location in the $m^{th}$ first cycle satisfy/satisfies:

when the resource appears in a slot, {first transmitting or receiving slot+[(m-1)*first cycle+(n-1)*third time domain interval+q*fourth time domain interval]*number of slots per frame/10} mod (1024*number of slots per frame), where m, n, and q are positive integers, mod represents a modulo operation, and the first transmitting or receiving slot is the initial time domain location; or

when the resource appears in a symbol, {first transmitting or receiving symbol+[(m-1)*first cycle+(n-1)*third time domain interval+q*fourth time domain interval]} mod (1024*number of slots per frame*number of frames per slot), where m, n, and q are positive integers, mod represents a modulo operation, and the first transmitting or receiving symbol is the initial time domain location.

For example, it is assumed that the first transmitting symbol is 2030, the first cycle is 30 symbols, and the second time domain interval value sequence is {16, 6} on a per-symbol basis. In this case, the third time domain interval is 16 symbols, and the fourth time domain interval is 6 symbols. In this case, a 2nd time domain interval and/or time domain location of the resource in a 2nd third time domain interval in a 2nd first cycle is: 2030+30*1+16*1+6*1. A 2nd time domain interval and/or time domain location of the resource in a 2nd third time domain interval in a 1st first cycle is: 2030+30*0+16*1+6*1.

In another implementation, when the resource configuration parameter includes the third configuration parameter, step S202 may include: determining, based on the third configuration parameter, the time domain interval and/or the time domain location of the resource based on a value sequence of the third configuration parameter from an initial time domain location of the resource.

In an example, a value-setting manner of the third configuration parameter is the sequential value-setting manner. Step S202 specifically includes: determining the time domain location of the resource based on the sequential value of the third configuration parameter from the initial time domain location of the resource. An example in which the value sequence of the third configuration parameter is {n1, n2} is used. That is, starting from the initial time domain location of the resource, the resource appears in a $0^{th}$ millisecond, an $n1^{th}$ millisecond, and an $(n1+n2)^{th}$ millisecond. By analogy, the resource appears in an $(n1+n2+n1)^{th}$ millisecond and an $(n1+n2+n1+n2)^{th}$ millisecond, and the resource sequentially appears based on {n1, n2}.

The time domain interval and/or the time domain location determined by the UE may satisfy the following formula: {first transmitting or receiving slot+(sum of time domain intervals between a $1^{st}$ time domain location and a $p^{th}$ time domain location)*number of slots per frame/10} mod (1024*number of slots per frame); or (first transmitting or receiving symbol+sum of time domain intervals between a $1^{st}$ time domain location and a $p^{th}$ time domain location) mod (1024*number of slots per frame*number of frames per slot). In the foregoing formula, sum of time domain intervals between a $1^{st}$ time domain location and a $p^{th}$ time domain location= f $t$ , where $t$ represents a time domain length of each time domain interval. 1

In this example, when determining the time domain interval and/or the time domain location, the UE may further first determine the number n of values of the third configuration parameter. The summation may be performed based on values from (p (mod) n)*(sum of values of a third configuration parameter)+1 to p (modulo) n.

In another example, when a value-setting manner of a value sequence of the third configuration parameter is the periodic embedded value-setting manner, the third configuration parameter may indicate the resource to appear based on the second cycle, and appear based on the third cycle in the second cycle. In this case, step S202 may include: determining the time domain interval and/or the time domain location of the resource based on the second cycle from the initial time domain location of the resource; and determining the time domain interval and/or the time domain location of the resource based on the third cycle in the second cycle. An example in which the third configuration parameter is {n1, n2} is used, n1 is an example of the second cycle, and n2 is an example of the third cycle. That is, the resource appears every n1 milliseconds, and the resource appears every n2 milliseconds in each n1-millisecond cycle. In this case, step S202 may include: determining the time domain interval and/or the time domain location of the resource based on the second cycle from the initial time domain location of the resource; and determining the time domain interval and/or the time domain location of the resource based on the third cycle in the second cycle.

An $n^{th}$ time domain interval and/or time domain location determined based on the third cycle in an $m^{th}$ second cycle satisfy/satisfies:

when the resource appears in a slot, {first transmitting or receiving slot+[(m-1)*second cycle+n*third cycle]*number of slots per frame/10} mod (1024*number of slots per frame), where m and n are positive integers, mod represents a modulo operation, and the first transmitting or receiving slot is the initial time domain location; or
when the resource appears in a symbol, {first transmitting or receiving symbol+[(m-1)*second cycle+n*third cycle] } mod (1024*number of slots per frame*number of frames per slot), where m and n are positive integers, mod represents a modulo operation, and the first transmitting or receiving symbol is the initial time domain location.

A $p^{th}$ time domain interval and/or time domain location that are/is in an $n^{th}$ third cycle in an $m^{th}$ second cycle determined by the UE and that are/is determined based on the fourth cycle satisfy/satisfies: when the resource appears in a slot, {first transmitting or receiving slot+[(m-1)*second cycle+(n-1)*third cycle+p*fourth cycle]*number of slots per frame/10} mod (1024*number of slots per frame), where m and n are positive integers, mod represents a modulo operation, and the first transmitting or receiving slot is the initial time domain location; or
when the resource appears in a symbol, {first transmitting or receiving symbol+[(m-1)*second cycle+(n-1)*third cycle+p*-fourth cycle]} mod (1024*number of slots per frame*number of frames per slot), where m and n are positive integers, mod represents a modulo operation, the first transmitting or receiving symbol is the initial time domain location, and p is a positive integer.

For example, it is assumed that the first transmitting symbol is 2030, the second cycle is 30 symbols, the third cycle is 16 symbols, and the fourth cycle is 6 symbols. In this case, a $2^{nd}$ time domain interval and/or time domain location of the resource in a $2^{nd}$ third cycle in a $2^{nd}$ second cycle is: 2030+30*1+16*1+6*1. A $2^{nd}$ time domain interval and/or time domain location of the resource in a $2^{nd}$ third cycle in a $1^{st}$ second cycle is: 2030+30*0+16*1+6*1. A time domain location of the resource in the $1^{st}$ second cycle is: 2030+30*1.

In another example, the resource configuration parameter further includes a fourth configuration parameter, the fourth configuration parameter is of the sequence structure, and the fourth configuration parameter indicates a time domain interval and/or a time domain location of a resource in a time domain interval corresponding to a last value in a value sequence of the third configuration parameter. When the resource is determined based on the third configuration parameter, step S202 may further include:

determining the time domain interval and/or the time domain location based on a value sequence of the fourth configuration parameter in the time domain interval corresponding to the last value of the value sequence of the third configuration parameter.

When the resource is determined based on the fourth configuration parameter, it is assumed that the third configuration parameter indicates a total of x+1 cycles including the first cycle to an x+1 cycle. It should be understood that the first cycle herein is not the first cycle indicated by the first configuration parameter. A $y^{th}$ time domain location in an $(x+1)^{th}$ cycle (that is, the last cycle) in ... in a $q^{th}$ third cycle in an $n^{th}$ second cycle in an $m^{th}$ first cycle satisfies: may satisfy:

$$\text{cycle+sum} \sum_1^y f$$

(m-1)*first cycle+(n-1)*second cycle+(q-1)*third cycle+...+(x-1) $x^{th}$ of first y time domain intervals in the last cycle, where f represents a time domain length of each time domain interval of the first y time domain intervals in the last cycle. For example, it is assumed that in the periodic embedded value-setting manner, a first transmitting symbol is 2030, a first cycle is 30 symbols, a second cycle is 16 symbols, and a third cycle is 6 symbols. In the third cycle, based on a value sequence of two symbols and three symbols, a $3^{rd}$ cycle is the last cycle. In this case, a $2^{nd}$ time domain interval and/or time domain location of the resource in a $2^{nd}$ second cycle in a $2^{nd}$ first cycle is: 2030+30*1+16*1+6*1. A $2^{nd}$ time domain interval and/or time domain location of the resource in a $2^{nd}$ second cycle in a $1^{st}$ first cycle is: 2030+30*0+16*1+6*1. A time domain location of the resource in a $2^{nd}$ second cycle in a $1^{st}$ first cycle is: 2030+30*0+16*1.

In the method shown in FIG. 2, one or more resource configuration parameters are mainly configured by using the network device, so that the user equipment may determine the time domain location of the resource based on an indication of the resource configuration parameter sent by the network device. In this solution, the cycle of the resource is not limited to a single fixed cycle, but may be flexibly configured according to an actual scenario, thereby implementing resource configuration in various scenarios and expanding the scope of applicable scenarios of the method for configuring a resource.

Because the foregoing method relates to different cases of the resource configuration parameters, the different cases are separately described below with reference to the accompanying drawings.

FIG. 3 is a schematic diagram of a first configuration parameter and a second configuration parameter that are both of a non-sequence structure according to this application. In FIG. 3, C1 is an example of a first cycle, J1 is an example of a first time domain interval, C1 is indicated by using the first configuration parameter, and J1 is indicated by using the second configuration parameter. That is, FIG. 3 is an example in which the resource configuration parameter includes the first configuration parameter and the second configuration parameter, and both the first configuration parameter and the second configuration parameter are of the non-sequence structure. As shown in FIG. 3, each C1 includes at least one J1, and an example in which three J1s are included is used in FIG. 3, where J2=C1-3*J1. After receiving the first configuration parameter and the second configuration parameter, UE determines, based on the indicated C1, that a resource appears at an interval of C1, and determines the resource in each C1 based on J1, where the resource appears at an interval of J1 in each C1. It can be learned that J1 in each C1 is periodic. An example in which each C1 includes three J1s is used in the figure, but it should be understood that, in practice, a specific number of J1s is not limited.

FIG. 4 is a schematic diagram of a second configuration parameter in a sequential value-setting manner according to this application. In FIG. 4, C1 is an example of a first cycle, and a sequence {J1, J2} including J1 and J2 is an example of a second time domain interval value sequence and/or a second time domain location value sequence. C1 is indicated by using a first configuration parameter of a non-sequence structure, and {J1, J2} is indicated by using a second configuration parameter of a sequence structure. As shown in FIG. 4, a resource appears in each C1 at an interval of J1 and J2, and J3=C1-J1-J2. After receiving the first configuration parameter and the second configuration parameter, UE determines, based on the indicated C1, that a resource appears at an interval of C1, and determines the resource in each C1 based on {J1, J2}, where the resource appears in a $J1^{th}$ millisecond and a $(n1+n2)^{th}$ millisecond in each C1.

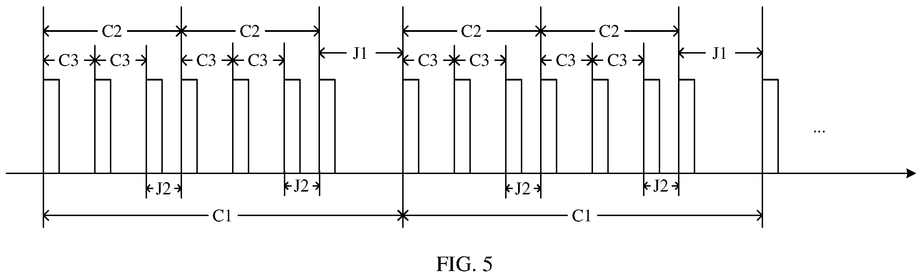

FIG. 5 is a schematic diagram of a second configuration parameter in a periodic embedded value-setting manner according to this application. In FIG. 5, C1 is an example of a first cycle, and a sequence {C2, C3} including C2 and C3 is an example of a second time domain interval value sequence and/or a second time domain location value sequence. C1 is indicated by using a first configuration parameter, and C2 and C3 are indicated by using a second configuration parameter. As shown in FIG. 5, each C1 includes at least one C2. An example in which two C2s are included is used in FIG. 5, and each C2 further includes at least one C3. An example in which two C3s are included is used in FIG. 5, J1=C1-2*C2, and J2=C2-2*C3. After receiving the first configuration parameter and the second configuration parameter, UE determines, based on the indicated C1, that a resource appears at an interval of C1, and determines the resource in each C1 based on {J1, J2}; and determines, based on the indicated C2, that the resource appears at an interval of C2 in each C1, and determines, based on the indicated C3, that the resource appears at an interval of C3 in each C2.

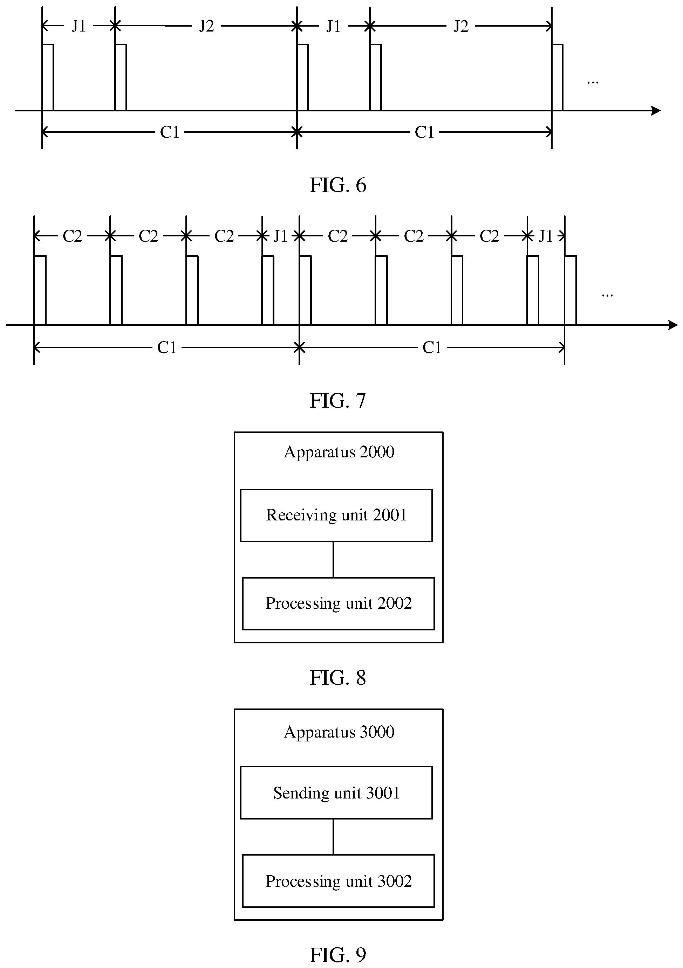

FIG. 6 is a schematic diagram of a third configuration parameter in a sequential value-setting manner according to this application. In FIG. 6, a sequence {J1, J2} including J1 and J2 is an example of a value sequence of the third configuration parameter. It should be understood that although C1 is marked in FIG. 6, C1 herein is naturally formed based on the sequence {J1, J2}, and is not configured by a network device. That is, FIG. 6 is an example of a sequence structure in which a resource configuration parameter includes the third configuration parameter, and the third configuration parameter is in the sequential value-setting manner. After receiving the third configuration parameter, UE determines, based on {J1, J2}, that the resource appears in a $J1^{th}$ millisecond, a $(J1+J2)^{th}$ millisecond, a $(J1+J2+J1)^{th}$ millisecond, a $(J1+J2+J1+J2)^{th}$ millisecond, and so on. That is, the resource appears in an order based on intervals of J1 and J2.

FIG. 7 is a schematic diagram of a third configuration parameter in a periodic embedded value-setting manner according to this application. In FIG. 7, a sequence {C1, C2} including C1 and C2 is an example of a value sequence of the third configuration parameter. In FIG. 7, J1=C1-3*C2. After receiving the third configuration parameter, UE determines, based on {C1, C2}, that a resource appears at an interval of C1, and the resource appears at an interval of C2 in each C1.

For a case in which the resource configuration parameter further includes a fourth configuration parameter, cases in which the fourth configuration parameter is in two value-setting manners are similar to that in FIG. 6 and FIG. 7, and an only difference is that the fourth configuration parameter indicates a time domain interval and/or a time domain location in a time domain interval corresponding to a last value. Details are not described herein again.

The foregoing mainly describes the method for configuring a resource in the embodiments of this application with reference to the accompanying drawings. It should be understood that, although the steps in the flowcharts in the foregoing embodiments are sequentially displayed, these steps are not necessarily performed sequentially according to the sequences shown in the accompanying drawings. Unless otherwise explicitly specified in this application, execution of the steps is not strictly limited, and the steps may be performed in other sequences. Moreover, at least some of the steps in the flowcharts of the foregoing embodiments may include a plurality of steps or a plurality of stages. These steps or stages are not necessarily performed at the same moment but may be performed at different moments. These steps or stages are not necessarily sequentially performed, but may be performed in turn or alternately with other steps or at least some of steps or stages of other steps. The following describes an apparatus for configuring a resource in an embodiment of this application with reference to the accompanying drawings.

FIG. 8 is a schematic diagram of an apparatus for configuring a resource according to an embodiment of this application. As shown in FIG. 8, the apparatus 2000 includes a receiving unit 2001 and a processing unit 2002. The apparatus 2000 may be integrated in user equipment.

The apparatus 2000 can be configured to perform steps that are performed by the user equipment and that are in any one of the methods for configuring a resource. For example, the receiving unit 2001 may be configured to perform step S201, and the processing unit 2002 may be configured to perform step S202.

In an implementation, the apparatus 2000 may further include a storage unit, configured to store data. The storage unit may be integrated into the processing unit 2002, or may be a unit that is independent of the receiving unit 2001 and the processing unit 2002. For another example, the receiving unit 2001 may be further configured to receive any of the foregoing indication information.

FIG. 9 is a schematic diagram of another apparatus for configuring a resource according to an embodiment of this application. As shown in FIG. 9, the apparatus 3000 includes a sending unit 3001 and a processing unit 3002. The apparatus 3000 may be integrated in a network device.

The apparatus 3000 can be configured to perform steps that are performed by the network device and that are in any one of the methods for configuring a resource. For example, the sending unit 3001 may be configured to perform step S201, and the processing unit 3002 may be configured to perform an operation of configuring a resource configuration parameter. For another example, the sending unit 3001 may be further configured to send any of the foregoing indication information.

In an implementation, the apparatus 3000 may further include a storage unit, configured to store data. The storage unit may be integrated into the processing unit 3002, or may be a unit that is independent of the sending unit 3001 and the processing unit 3002.

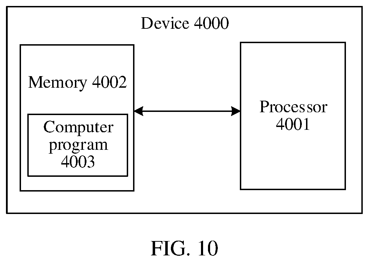

FIG. 10 is a schematic diagram of a hardware structure of an electronic device according to an embodiment of this application. As shown in FIG. 10, the electronic device 4000 includes: at least one processor 4001 (only one is shown in FIG. 10), a memory 4002, and a computer program 4003 that is stored in the memory 4002 and that can be run on the at least one processor 4001. When the processor 4001 implements the computer program 4003, the steps in any one of the foregoing methods are implemented.

In an implementation, the electronic device 4000 is user equipment, and is configured to perform the steps performed by the user equipment in the foregoing method.

In another implementation, the electronic device 4000 is a network device, and is configured to perform the steps performed by the network device in the foregoing method.

A person skilled in the art may understand that FIG. 10 is merely an example of the electronic device, and constitutes no limitation on the electronic device. In practice, the electronic device may include more or fewer components than those shown in the figure, or have a combination of some components, or have a different component arrangement, for example, may further include an input/output device, a network access device, and the like.

The processor 4001 may be a central processing unit (central processing unit, CPU), or may be another general-purpose processor, a digital signal processor (digital signal processor, DSP), an application specific integrated circuit (application specific integrated circuit, ASIC), a field-programmable gate array (field-programmable gate array, FPGA), or another programmable logic device, a discrete gate or a transistor logic device, a discrete hardware component, or the like. The general-purpose processor may be a microprocessor, or the processor may be any conventional processor or the like.

In some embodiments, the memory 4002 may be an internal storage unit of the electronic device 4000, for example, a hard disk drive or an internal memory of the electronic device 4000. In some other embodiments, the memory 4002 may be alternatively an external storage device of the electronic device 4000, for example, a plug-in hard disk drive, a smart media card (smart media card, SMC), a secure digital (secure digital, SD) card, or a flash card (flash card) that is provided on the electronic device 4000. Optionally, the memory 4002 may include both an internal storage unit and an external storage device of the electronic device 4000. The memory 4002 is configured to store an operating system, an application, a bootloader, data, another program, and the like, for example, program code of the computer program. The memory 4002 may be further configured to temporarily store data that has been output or that is to be output.

It should be noted that content such as information exchange or an execution process between the apparatuses/units is based on a same concept as that in the method embodiments of this application. Therefore, for specific functions and technical effects brought by the apparatuses/units, refer to the method embodiment parts. Details are not described herein again.

A person skilled in the art may clearly understand that, for the objective of convenient and brief description, only division of the foregoing functional units and modules is used as an example for description. In actual application, the foregoing functions may be allocated to and completed by different functional units and modules according to requirements. That is, an internal structure of the apparatus is divided into different functional units and modules to complete all or some of the functions described above. The functional units and modules in the embodiments may be integrated into one processing unit, or each of the units may exist alone physically, or two or more units are integrated into one unit. The integrated unit may be implemented in a form of hardware or in a form of a software functional unit. In addition, specific names of the functional units and modules are merely intended for the convenience of distinguishing between each other, and are not intended to limit the protection scope of this application. For specific work processes of the units and apparatus in the system, refer to the corresponding processes in the foregoing method embodiments. Details are not described herein again.

An embodiment of this application further provides an electronic device, where the electronic device includes: at least one processor, a memory, and a computer program that is stored in the memory and that can be run on the at least one processor. When the processor implements the computer program, the steps in any one of the foregoing method embodiments are implemented.

The electronic device may be user equipment, and is configured to perform steps performed by the user equipment; and the electronic device may alternatively be a network device, and is configured to perform steps performed by the network device.

An embodiment of this application further provides a computer-readable storage medium. The computer-readable storage medium stores a computer program. When the computer program is executed by a processor, the steps in the foregoing method embodiments can be implemented.

An embodiment of this application further provides a chip, including a processor. The processor is configured to read and execute a computer program stored in a memory. When the computer program is executed by the processor, the steps in the foregoing method embodiments can be implemented.

Optionally, the chip further includes a memory, and the memory is electrically connected to the processor.

Optionally, the chip may further include a communication interface.

An embodiment of this application further provides a computer program product. When the computer program product is executed by the processor, the steps in the foregoing method embodiments can be implemented.

When the integrated unit is implemented in the form of a software functional unit and sold or used as an independent product, the integrated unit may be stored in a computer-readable storage medium. Based on this understanding, in this application, all or some of the procedures in the methods in the embodiments may be implemented by using a computer program instructing relevant hardware. The computer program may be stored in a computer-readable storage medium. When the computer program is executed by a processor, the steps in the foregoing method embodiments can be performed. The computer program includes computer program code. The computer program code may be in a source code form, an object code form, an executable file, some intermediate forms, or the like. The computer-readable medium may include at least any entity or apparatus capable of adding computer program code to a photographing apparatus/terminal device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, according to legislation and patent practice, the computer-readable medium may not be an electrical carrier signal or a telecommunication signal.

In the foregoing embodiments, the descriptions of the embodiments have their respective focuses. For a part that is not described in detail or recorded in an embodiment, refer to related descriptions in other embodiments.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it does not be considered that the implementation goes beyond the scope of this application.

In the embodiments provided in this application, it should be understood that the disclosed apparatus/electronic device and method may be implemented in other manners. For example, the apparatus/electronic device embodiments described above are merely examples. For example, division into the modules or units is merely a logical function division and there may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

It should be understood that when being used in the specification and the appended claims of this application, the term "include" indicates presence of a described feature, entirety, step, operation, element, and/or component, but does not exclude presence or addition of one or more other features, entireties, steps, operations, elements, components, and/or sets thereof.

It should be further understood that the term "and/or" used in the specification of this application and the appended claims refers to any and all possible combinations of one or more of the associated listed items, and includes these combinations.

As used in the specification of this application and the appended claims, the term "if" may be interpreted based on the context as "when...", "once", "in response to determining", or "in response to detecting". Similarly, the phrase "if determining" or "if detecting [a described condition or event]" may be interpreted based on the context as a meaning of "once determining", "in response to determining", "once detecting [the described condition or event]", or "in response to detecting [the described condition or event]".

In addition, in descriptions of the specification of this application and the appended claims, the terms such as "first", "second", and "third" are merely used for distinguishing descriptions, and cannot be understood as an indication or implication of relative importance.

Reference to "one embodiment", "some embodiments", or the like described in the specification of this application means that a specific characteristic, structure, or feature described in combination with this embodiment is included in one or more embodiments of this application. Therefore, statements "in an embodiment", "in some embodiments", "in other embodiments", "in some other embodiments", and the like appearing in different parts of this specification do not necessarily refer to a same embodiment, but mean "one or more but not all embodiments", unless otherwise specified. The terms "include", "contain", "have", and variations thereof all mean "including but not limited to", unless otherwise specified. The foregoing embodiments are merely used to describe the technical solutions of this application, but are not intended to limit the technical solutions. Although this application is described in detail with reference to the above embodiments, a person of ordinary skill in the art should understand that modifications may still be made to the technical solutions described in the foregoing embodiments, or equivalent replacements may be made to the part of the technical features; and these modifications or replacements will not cause the essence of corresponding technical solutions to depart from the spirit and scope of the technical solutions in the embodiments of this application, and shall be included in the protection scope of this application.

**Claims**

1.  A method for configuring a resource, comprising:
    sending a resource configuration parameter to user equipment, wherein the resource configuration parameter comprises a first configuration parameter and a second configuration parameter, the first configuration parameter is of a non-sequence structure, the first configuration parameter indicates a first cycle of a resource, and the second configuration parameter indicates a time domain interval and/or a time domain location of the resource in the first cycle; or the resource configuration parameter comprises a third configuration parameter, the third configuration parameter is of a sequence structure, and the third configuration parameter indicates a time domain interval and/or a time domain location of a resource.

2. The method according to claim 1, wherein the second configuration parameter is of the non-sequence structure, and the second configuration parameter indicates a resource to periodically appear based on a first time domain interval and/or a first time domain location in the first cycle; or the second configuration parameter is of the sequence structure, and the second configuration parameter indicates a resource to appear based on a second time domain interval value sequence and/or a second time domain location value sequence in the first cycle.

3. The method according to claim 1 or 2, wherein when the second configuration parameter is of the sequence structure, the second configuration parameter is in a sequential value-setting manner or a periodic embedded value-setting manner.

4. The method according to any one of claims 1 to 3, wherein the third configuration parameter is in the sequential value-setting manner or the periodic embedded value-setting manner.

5. The method according to any one of claims 1 to 4, wherein the resource configuration parameter further comprises a fourth configuration parameter, the fourth configuration parameter is of the sequence structure, and the fourth configuration parameter indicates a time domain interval and/or a time domain location of a resource in a time domain interval corresponding to a last value in a value sequence of the third configuration parameter.

6. The method according to claim 5, wherein the fourth configuration parameter is in the sequential value-setting manner or the periodic embedded value-setting manner.

7. The method according to any one of claims 1 to 6, wherein the resource configuration parameter further comprises first information and/or second information, the first information indicates a value range of the first configuration parameter, and the second information indicates a data structure type of the first configuration parameter; and

when the second configuration parameter is of the non-sequence structure, the resource configuration parameter further comprises third information and/or fourth information, the third information indicates a value range of the second configuration parameter, and the fourth information indicates a data structure type of the second configuration parameter; or
when the second configuration parameter is of the sequence structure, the resource configuration parameter further comprises fifth information and/or sixth information, the fifth information indicates a value range of the second configuration parameter, and the sixth information indicates a number of values of the second configuration parameter.

8. The method according to any one of claims 1 to 6, wherein the resource configuration parameter further comprises seventh information and/or eighth information, the seventh information indicates a value range of the third configuration parameter, and the eighth information indicates a number of values of the third configuration parameter.

9. The method according to any one of claims 5 to 8, wherein when the resource configuration parameter comprises the fourth configuration parameter, the resource configuration parameter further comprises ninth information and/or tenth information, the ninth information indicates a value range of the fourth configuration parameter, and the tenth information indicates a number of values of the fourth configuration parameter.

10. A method for configuring a resource, comprising:

receiving a resource configuration parameter sent by a network device, wherein the resource configuration parameter comprises a first configuration parameter and a second configuration parameter, the first configuration parameter is of a non-sequence structure, the first configuration parameter indicates a first cycle of a resource, and the second configuration parameter indicates a time domain interval and/or a time domain location of the resource in the first cycle; or the resource configuration parameter comprises a third configuration parameter, the third configuration parameter is of a sequence structure, and the third configuration parameter indicates a time domain interval and/or a time domain location of a resource; and
determining the time domain interval and/or the time domain location of the resource based on the resource configuration parameter.

11. The method according to claim 10, wherein the determining the time domain interval and/or the time domain location of the resource based on the resource configuration parameter comprises:
determining, based on the first configuration parameter, the time domain location of the resource based on the first cycle from an initial time domain location of the resource.

12. The method according to claim 10 or 11, wherein the determining the time domain interval and/or the time domain location of the resource based on the resource configuration parameter comprises:
determining, in the first cycle based on the second configuration parameter, the time domain interval and/or the time domain location of the resource based on a time domain interval and/or a time domain location indicated by the second configuration parameter.

13. The method according to claim 12, wherein the determining, in the first cycle based on the second configuration parameter, the time domain interval and/or the time domain location of the resource based on a time domain interval and/or a time domain location indicated by the second configuration parameter comprises:
determining, in the first cycle, a $p^{th}$ time domain interval and/or time domain location of the resource in the first cycle based on a sum of time domain intervals between a $1^{st}$ time domain location and a $p^{th}$ time domain location of the resource, wherein p is a positive integer, and the sum of the time domain intervals between the $1^{st}$ time domain location and the $p^{th}$ time domain location is obtained based on the time domain interval and/or the time domain location indicated by the second configuration parameter.

14. The method according to claim 13, wherein a $p^{th}$ time domain interval and/or time domain location of the resource in an $m^{th}$ first cycle satisfies:

when the resource appears in a slot, {first transmitting or receiving slot+[(m-1)*first cycle+sum of time domain intervals between a $1^{st}$ time domain location and a $p^{th}$ time domain location in an $m^{th}$ first cycle]*number of slots per frame/10} mod (1024*number of slots per frame), wherein m is a positive integer, mod represents a modulo operation, and the first transmitting or receiving slot is the initial time domain location; or
when the resource appears in a symbol, {first transmitting or receiving symbol+[(m-1)*first cycle+sum of time domain intervals between a $1^{st}$ time domain location and a $p^{th}$ time domain location in an $m^{th}$ first cycle]} mod (1024*number of slots per frame*number of frames per slot), wherein m is a positive integer, mod represents a modulo operation, and the first transmitting or receiving symbol is the initial time domain location.

15. The method according to claim 13 or 14, wherein
when the second configuration parameter is of the non-sequence structure, the sum of time domain intervals between the $1^{st}$ time domain location and the $p^{th}$ time domain location is determined based on a first time domain interval and/or a first time domain location indicated by the second configuration parameter, and the sum of time domain intervals between the $1^{st}$ time domain location and the $p^{th}$ time domain location=p*first time domain interval.

16. The method according to claim 13 or 14, wherein when the second configuration parameter is of the sequence structure, and a value-setting manner of the second configuration parameter is sequential value-setting, the sum of time domain intervals between the $1^{st}$ time domain location and the $p^{th}$ time domain location is obtained by using a second time domain interval value sequence and/or a second time domain location value sequence indicated by the second configuration parameter.

17. The method according to any one of claims 12 to 14, wherein when the second configuration parameter is of the sequence structure, and a value-setting manner of the second configuration parameter is a periodic embedded value-setting manner, the second time domain interval value sequence comprises a third time domain interval and a fourth time domain interval, and the second time domain location value sequence comprises a third time domain location and a fourth time domain location; the second configuration parameter indicates the resource to periodically appear based on the third time domain interval and/or the third time domain location in the first cycle, and the resource to periodically appear based on the fourth time domain interval and/or the fourth time domain location in a time domain interval corresponding to the third time domain interval and/or the third time domain location; and
the determining, in the first cycle based on the second configuration parameter, the time domain interval and/or the time domain location of the resource based on a time domain interval and/or a time domain location indicated by the second configuration parameter comprises:

determining, in a time domain interval corresponding to the first cycle, the time domain interval and/or the time domain location of the resource based on the third time domain interval and/or the third time domain location; and

determining, in a time domain interval corresponding to the third time domain interval and/or the third time domain location, the time domain interval and/or the time domain location of the resource based on the fourth time domain interval and/or the fourth time domain location.

18. The method according to claim 17, wherein a $q^{th}$ time domain interval and/or time domain location of the resource that are/is determined, based on the fourth time domain interval, in a time domain interval corresponding to an $n^{th}$ third time domain interval and/or third time domain location in the $m^{th}$ first cycle satisfy/satisfies:

when the resource appears in a slot, {first transmitting or receiving slot+[(m-1)*first cycle+(n-1)*third time domain interval+q*fourth time domain interval]*number of slots per frame/10} mod (1024*number of slots per frame), wherein m, n, and q are positive integers, mod represents a modulo operation, and the first transmitting or receiving slot is the initial time domain location; or
when the resource appears in a symbol, {first transmitting or receiving symbol+[(m-1)*first cycle+(n-1)*third time domain interval+q*fourth time domain interval]} mod (1024*number of slots per frame*number of frames per slot), wherein m, n, and q are positive integers, mod represents a modulo operation, and the first transmitting or receiving symbol is the initial time domain location.

19. The method according to claim 10, wherein when the resource configuration parameter comprises the third configuration parameter, the determining the time domain interval and/or the time domain location of the resource based on the resource configuration parameter comprises:
determining, based on the third configuration parameter, the time domain interval and/or the time domain location of the resource based on a value sequence of the third configuration parameter from an initial time domain location of the resource.

20. The method according to claim 19, wherein the third configuration parameter is in a sequential value-setting manner, the third configuration parameter indicates the resource to appear based on a sequential value of the third configuration parameter and a time domain interval and/or a time domain location corresponding to each value, and the determining, based on the third configuration parameter, the time domain interval and/or the time domain location of the resource based on a value sequence of the third configuration parameter from an initial time domain location of the resource comprises:
determining the time domain location of the resource based on the sequential value of the third configuration parameter from the initial time domain location of the resource.

21. The method according to claim 19, wherein the third configuration parameter is in a periodic embedded value-setting manner, the third configuration parameter indicates the resource to appear based on a second cycle and to appear based on a third cycle in the second cycle, and the determining, based on the third configuration parameter, the time domain interval and/or the time domain location of the resource based on a value sequence of the third configuration parameter from an initial time domain location of the resource comprises:

determining the time domain interval and/or the time domain location of the resource based on the second cycle from the initial time domain location of the resource; and
determining the time domain interval and/or the time domain location of the resource based on the third cycle in the second cycle.

22. The method according to claim 21, wherein an $n^{th}$ time domain interval and/or time domain location of the resource that are/is determined based on the third cycle in an $m^{th}$ second cycle satisfy/satisfies:

when the resource appears in a slot, {first transmitting or receiving slot+[(m-1)*second cycle+n*third cycle]*number of slots per frame/10} mod (1024*number of slots per frame), wherein m and n are positive integers, mod represents a modulo operation, and the first transmitting or receiving slot is the initial time domain location; or
when the resource appears in a symbol, {first transmitting or receiving symbol+[(m-1)*second cycle+n*third cycle]} mod (1024*number of slots per frame*number of frames per slot), wherein m and n are positive integers, mod represents a modulo operation, and the first transmitting or receiving symbol is the initial time domain location.

23. The method according to any one of claims 19 to 22, wherein the resource configuration parameter further comprises a fourth configuration parameter, the fourth configuration parameter is of the sequence structure, and the fourth configuration parameter indicates a time domain interval and/or a time domain location of a resource in a time domain interval corresponding to a last value in a value sequence of the third configuration parameter; and
the determining, based on the third configuration parameter, the time domain interval and/or the time domain location of the resource based on a value sequence of the third configuration parameter from an initial time domain location of the resource further comprises:
determining the time domain interval and/or the time domain location based on a value sequence of the fourth configuration parameter in the time domain interval corresponding to the last value of the value sequence of the third configuration parameter.

24. The method according to claim 23, wherein the fourth configuration parameter is in the sequential value-setting manner or the periodic embedded value-setting manner.

25. An apparatus for configuring a resource, comprising:
a sending unit, configured to send a resource configuration parameter to user equipment, wherein the resource configuration parameter comprises a first configuration parameter and a second configuration parameter, the first configuration parameter is of a non-sequence structure, the first configuration parameter indicates a first cycle of a resource, and the second configuration parameter indicates a time domain interval and/or a time domain location of the resource in the first cycle; or the resource configuration parameter comprises a third configuration parameter, the third configuration parameter is of a sequence structure, and the third configuration parameter indicates a time domain interval and/or a time domain location of a resource.

26. A method for configuring a resource, comprising:

a receiving unit, configured to receive a resource configuration parameter sent by a network device, wherein the resource configuration parameter comprises a first configuration parameter and a second configuration parameter, the first configuration parameter is of a non-sequence structure, the first configuration parameter indicates a first cycle of a resource, and the second configuration parameter indicates a time domain interval and/or a time domain location of the resource in the first cycle; or the resource configuration parameter comprises a third configuration parameter, the third configuration parameter is of a sequence structure, and the third configuration parameter indicates a time domain interval and/or a time domain location of a resource; and
a processing unit, configured to determine the time domain interval and/or the time domain location of the resource based on the resource configuration parameter.

27. An electronic device, comprising a memory, a processor, and a computer program that is stored in the memory and that can be run on the processor, wherein when the processor implements the computer program, the method according to any one of claims 1 to 9 or any one of claims 10 to 24 is implemented.

28. A computer-readable storage medium, wherein the computer-readable storage medium stores a computer program, and when the computer program is implemented by the processor, the method according to any one of claims 1 to 9 or any one of claims 10 to 24 is implemented.

FIG. 1

S201: A resource configuration parameter →

S202: Determine a time domain interval and/or a time domain location of a resource based on the resource configuration parameter

FIG. 2

FIG. 3

FIG. 4

FIG. 5

FIG. 6

FIG. 7

FIG. 8

FIG. 9

Device 4000

Memory 4002

Computer
program
4003

Processor
4001

FIG. 10

# INTERNATIONAL SEARCH REPORT

| International application No. |
|---|
| **PCT/CN2023/114388** |

### A. CLASSIFICATION OF SUBJECT MATTER

H04W72/23(2023.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, ENTXTC, CNABS, WPABS, DWPI, IEEE, 3GPP: 第二, 第三, 第一, 非序列, 序列, 间隔, 位置, 指示, 周期, 资源, 配置, 时域, 时间, second, third, first, non-sequence, sequence, interval, location, indication, period, resource, configuration, time, domain

### C. DOCUMENTS CONSIDERED TO BE RELEVANT

| Category* | Citation of document, with indication, where appropriate, of the relevant passages | Relevant to claim No. |
|---|---|---|
| A | CN 112930706 A (LENOVO (SINGAPORE) PTE. LTD.) 08 June 2021 (2021-06-08) description, paragraphs [0130]-[0139], and figure 7 | 1-28 |
| A | CN 110167164 A (HUAWEI TECHNOLOGIES CO., LTD.) 23 August 2019 (2019-08-23) entire document | 1-28 |
| A | CN 114765863 A (VIVO COMMUNICATION TECHNOLOGY CO., LTD.) 19 July 2022 (2022-07-19) entire document | 1-28 |
| A | CN 114980318 A (HUAWEI TECHNOLOGIES CO., LTD.) 30 August 2022 (2022-08-30) entire document | 1-28 |
| A | WO 2021088085 A1 (HUAWEI TECHNOLOGIES CO., LTD.) 14 May 2021 (2021-05-14) entire document | 1-28 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 December 2023** | **07 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/114388**

| Patent document cited in search report | | | Publication date (day/month/year) | Patent family member(s) | | | Publication date (day/month/year) |
|---|---|---|---|---|---|---|---|
| CN | 112930706 | A | 08 June 2021 | US | 2022039128 | A1 | 03 February 2022 |
| | | | | EP | 3874873 | A1 | 08 September 2021 |
| | | | | WO | 2020089869 | A1 | 07 May 2020 |
| | | | | US | 2020146034 | A1 | 07 May 2020 |
| CN | 110167164 | A | 23 August 2019 | EP | 3742848 | A1 | 25 November 2020 |
| | | | | WO | 2019158099 | A1 | 22 August 2019 |
| | | | | US | 2021084687 | A1 | 18 March 2021 |
| | | | | CA | 3091093 | A1 | 22 August 2019 |
| | | | | KR | 20200116510 | A | 12 October 2020 |
| CN | 114765863 | A | 19 July 2022 | WO | 2022152176 | A1 | 21 July 2022 |
| CN | 114980318 | A | 30 August 2022 | WO | 2022179388 | A1 | 01 September 2022 |
| WO | 2021088085 | A1 | 14 May 2021 | CN | 114600516 | A | 07 June 2022 |

Form PCT/ISA/210 (patent family annex) (July 2022)

**REFERENCES CITED IN THE DESCRIPTION**

**Patent documents cited in the description**

- CN 202211182470